**Europäisches Patentamt**

**European Patent Office**

**Office européen des brevets**

(11) Veröffentlichungsnummer : **0 058 351 B1**

(12) # EUROPÄISCHE PATENTSCHRIFT

(45) Veröffentlichungstag der Patentschrift : 05.06.85

(21) Anmeldenummer : 82100810.9

(22) Anmeldetag : 04.02.82

(51) Int. Cl.⁴ : **H 02 K 57/00, H 02 K 17/16, H 02 K 3/51**

(54) **Verbindungsvorrichtung für Wicklungsanfänge und Wicklungsenden der Induktionsmotorläuferwicklung eines elektrischen Motors.**

(30) Priorität : 13.02.81 DE 3105318

(43) Veröffentlichungstag der Anmeldung : 25.08.82 Patentblatt 82/34

(45) Bekanntmachung des Hinweises auf die Patenterteilung : 05.06.85 Patentblatt 85/23

(84) Benannte Vertragsstaaten : AT BE CH DE FR GB IT LI NL SE

(56) Entgegenhaltungen :
DE-A- 2 643 904
DE-C-  276 610
FR-A-  740 581
FR-A- 2 247 842
US-A- 1 803 493

(73) Patentinhaber : Siemens Aktiengesellschaft Berlin und München Wittelsbacherplatz 2 D-8000 München 2 (DE)

(72) Erfinder : Bradler, Peter, Dipl.-Ing. Fritz-Erler-Strasse 4 D-8700 Würzberg (DE)
Erfinder : Paur, Horst Am Dicken Turm 1A D-8700 Würzburg (DE)
Erfinder : Fischer, Hans Flürleinstrasse 18 D-8700 Würzburg (DE)

**Beschreibung**

Die Erfindung bezieht sich auf eine Verbindungsvorrichtung für Wicklungsanfänge und Wicklungsenden der Induktionsmotor-Läuferwicklung eines elektrischen Motors der im ersten Teil des Anspruchs 1 angegebenen Art. Eine derartige Verbindungsvorrichtung wird bei einer aus der DE-B-2 530 294 bekannten Motorwicklung verwendet.

Ein Ausführungsbeispiel der bekannten Wicklung zeigt eine zweisträngige, zwölfpolige, sämtliche vierundzwanzig Nuten des Läuferblechpaketes belegende Induktionsmotor-Wicklung ; die Nutzahl entspricht damit der üblichen aufgrund von Polzahl, Phasenzahl und Nutzahl pro Pol und Strang sich ergebenden Formel $N_2 = 2p \cdot m_2 \cdot q_2$. Die die beiden Spulengruppen bildenden Stränge bestehen aus je sechs Spulen, die jeweils in Reihe geschaltet sind ; jeder Wicklungsanfang einer solchen Reihenschaltung ist dann zusätzlich mit einem Wicklungsende dieser Reihenschaltung unmittelbar im Sinne eines Kurzschlußkreises verbunden. Dazu bedarf es einer Verbindungsvorrichtung, die sicherstellt, daß die beim Wickeln je nach Spulengruppenzahl entstehenden Wicklungsanfänge und Wicklungsenden in richtiger Weise miteinander verbunden werden. Es ist bekannt, dazu nach dem Wickeln der einzelnen Spulengruppen die Wicklungsenden und Wicklungsanfänge mittels Gasflamme abzuisolieren und mittels Hartlot miteinander zu verlöten ; anschließend werden die Wicklungsenden und Wicklungsanfänge um die Läuferwelle gewickelt und zur Gewährleistung einer hohen Drehzahlfestigkeit durch eine gegen Feuchtigkeit geschützte Bandage gesichert. Mit einer derartig gesicherten Wicklung ist ein Wicklungs-Prüfgerät nicht mehr kontaktierbar. Mit größer werdender Zahl der Spulengruppen und entsprechend zunehmender Anzahl von zu verbindenden Wicklungsanfängen und Wicklungsenden steigt der Schwierigkeitsgrad einer solchen Handhabung, insbesondere wegen der Gefahr einer Verwechslung der während des Wickelns zunächst frei hängenden oder provisorisch an der Läuferwelle gehaltenen Wicklungsanfänge und Wicklungsenden sowie hinsichtlich der Gewährleistung einer sorgfältigen Verbindung der Wicklungsenden und genügenden Fliehkraftfestigkeit sowie der Vermeidung einer zu großen Unwucht.

Es ist daher Aufgabe der vorliegenden Erfindung, eine Verbindungsvorrichtung der eingangs genannten Art zu schaffen, die bei maximaler Betriebssicherheit, insbesondere für hochtourige Antriebe wie Waschautomaten mit hohen Schleuder-Enddrehzahlen, eine wesentlich vereinfachte, insbesondere voll mechanisierbare Herstellung der Verbindungspunkte zwischen den einzelnen Wicklungsanfängen und Wicklungsenden der Spulengruppen erlaubt.

Die Lösung dieser Aufgabe erfolgt erfindungsgemäß durch die kennzeichnenden Teil des Anspruchs 1 angegebenen Maßnahmen. Ausgehend von der Erkenntnis, daß eine zusätzliche Kurzschlußverbindung zwischen den Verbindungspunkten der Wicklungsanfänge und Wicklungsenden der einzelnen Spulengruppen die prinzipielle Funktion des vorgenannten Motor nicht ungünstig beeinflußt, erlaubt der erfindungsgemäß vorgesehene Schaltring mit den von der Wicklung umschlungenen Schaltringhaken eine zusammenhängende Fertigung der gesamten Induktionsmotor-Läuferwicklung mit ununterbrochenem Wicklungsdraht, beispielsweise mittels eines sogenannten Flyers, der während des Wickelvorganges jeweils beim Übergang von dem Spulenende der einen Spulengruppe zum Spulenanfang der anderen Spulengruppe einen der Schaltringhaken des Schaltringes umschlingt. Dadurch sind die Verbindungen der Wicklungsanfänge und Wicklungsenden in ihrer richtigen Verschaltung mittels einer voll mechanisierbaren Fertigung bereits während des Wickelvorganges herstellbar und positionierbar ; nach dem Wickelvorgang kann dann durch einfaches Heißverstemmen der Schaltringhaken mit den eingehängten Wicklungsdrähten die endgültige elektrische Kontaktierung und drehzahlfeste mechanische Fixierung erfolgen.

Da der Schaltring vor dem Wickelkopf der Induktionsmotor-Wicklung angeordnet ist, der dem allein mit der Universalmotor-Wicklung verbundenen Kollektor abgewandt ist, kann mit Sicherheit verhindert werden, daß sich die mechanisierten Wickelvorgänge der mit dem Kommutator zu kontaktierenden Universal Motor-Wicklung einerseits und der mit dem Schaltring zu kontaktierenden Induktionsmotor-Wicklung andererseits gegenseitig behindern. Dadurch, daß der Schaltring mit mehreren, an seinem Umfang gleichmäßig verteilt angeordneten Schaltringhaken versehen ist, deren Anzahl zumindest gleich der Anzahl der herzustellenden Verbindungen ist, ist einerseits im Sinne einer geringen Unwucht eine Verteilung der Wicklungsanschlüsse über den gesamten Umfang möglich und wird andererseits erreicht, daß an jedem Schaltringhaken nur jeweils ein Draht zu kontaktieren ist.

Möglichst kurze stirnseitige Drahtverbindungen zwischen den Spulengruppen und den Schaltringhaken erhält man dadurch, daß die jeweils von einem Wicklungsende und einem anschließenden Wicklungsanfang kontaktierten bzw. umschlungenen Schaltringhaken in ihrer tangentialen Lage zum Läuferblechpaket etwa in der Mitte zwischen der Nutöffnung des Wicklungsendes und der Nutöffnung des Wicklungsanfangs angeordnet sind.

Nach einer weiteren vorteilhaften Ausgestaltung der Erfindung ist vorgesehen, daß der Schaltring in einer zumindest zweiteiligen, isolierenden Kassette einkapselbar ist, deren erster, zunächst axial über die Welle schiebbarer Kassettenteil als Träger für den ihn konzentrisch umgebenden Schaltring und deren zweiter, abschließend über die Welle des Läufers schiebbarer Kassettenteil in Form einer zur Stirnseite des Läuferblechpaketes offenen, den Schaltring nach außen schützenden Abdeckglocke ausgebildet ist. Dadurch ist es möglich, bei einfachster Fertigung und Montage der Einzelteile schrittweise zunächst den Schaltring auf der Welle elektrisch isoliert zu montieren und anschließend bei der Wicklung der Induktionsmotor-Wicklung die Schaltring-Haken zu kontaktieren ; nach der Wicklung der gesamten Läuferwicklung kann ungehindert ein Wicklungs-Prüfgerät an den Schaltring angeschlossen werden, der seinerseits abschließend nach der Wicklungsprüfung durch Aufstecken des äußeren Kassettenteils nach außen geschützt und isoliert eingekapselt ist. Durch spezielle Formgebung der Abdeckglocke, ist es auf einfache Weise möglich, die Wicklungsdrahtenden zwischen den Schaltring-Haken und dem Wickelkopf gleichzeitig, insbesondere fliehkraftfest, zu fixieren. In vorteilhafter Weise kann der äußere Kassettenteil auch zusätzlich zur Aufnahme eines Lüfterrades dienen, das entweder auf den äußeren Kassetteinteil aufgesteckt oder mit diesem einstückig gefertigt, insbesondere spritzgegossen, ist.

Die Erfindung sowie weitere vorteilhafte Ausgestaltungen werden im folgenden anhand schematisch dargestellter Ausführungsbeispiele in der Zeichnung näher erläutert. Darin zeigen :

Figuren 1, 2 jeweils in einem Längsschnitt zwei verschiedene Ausführungen eines vor einem Wickelkopf der Läufers in einer teilbaren Kassette gekapselt gehaltenen Schaltrings,

Figur 3 eine Draufsicht auf den Schaltring gemäß Fig. 1, 2,

Figur 4 bis 8 in einem Querschnitt jeweils verschiedene Formen von Schaltring-Haken,

Figur 9 das Wicklungs- und Anschlußschema einer in den achtzehn Nuten eines Läuferblechpaketes untergebrachten zweipoligen Universalmotor-Läuferwicklung,

Figur 10 das Wicklungs- und Anschlußschema einer in den gleichen achtzehn Nuten des Läuferblechpaketes untergebrachten achpoligen Induktionsmotor-Läuferwicklung mit an neun Schaltringhaken angeschlossenen neun Spulenpaaren mit je zwei zu einem Kurzschlußkreis in Reihe geschalteten Einzelspulen,

Figur 11 das Wicklungs- und Anschlußschema einer in achtzehn Nuten des Läuferblechpaketes untergebrachten sechspoligen Induktionsmotor-Läuferwicklung mit an vier Schaltringhaken angeschlossenen drei Spulenpaaren mit je drei zu einem Kurzschlußkreis in Reihe geschalteten Einzelspulen.

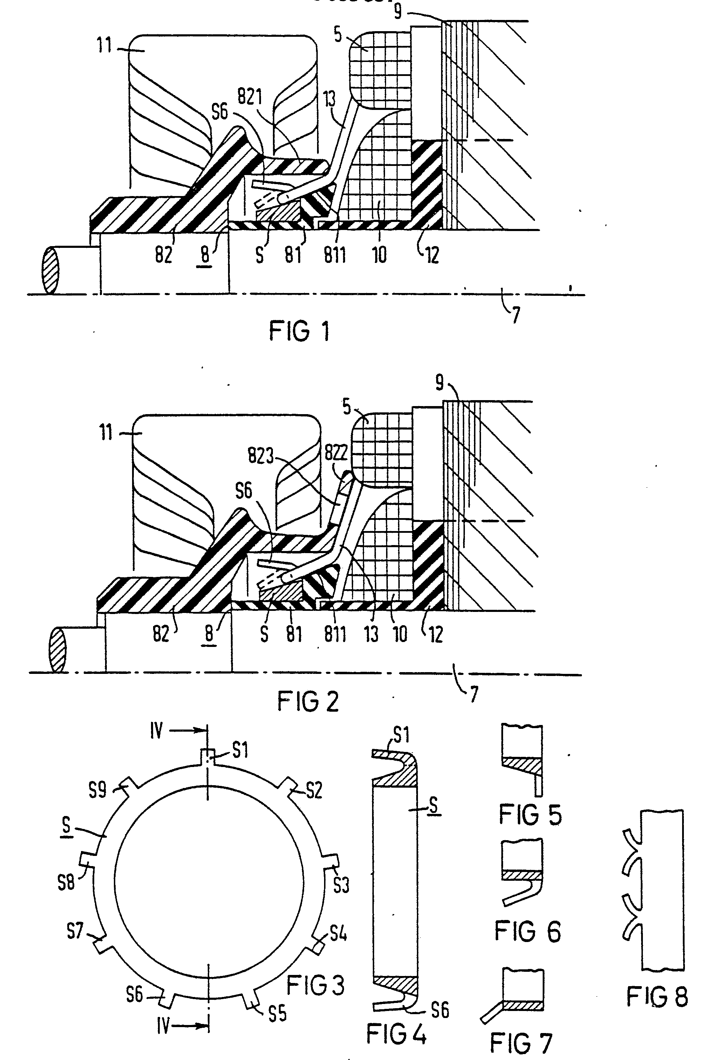

Die Figuren 1 und 2 zeigen jeweils in einem Längsschnitt zwei verschiedene Ausführungsformen des an der linken Stirnseite des Läufers in einer teilbaren Kassette 8 gekapselt gehaltenen Schaltrings S. In den Nuten des auf der Welle 7 angeordneten Läuferblechpaketes 9 ist radial innen zunächst die zweipolige Universalmotor-Wicklung 10 gemäß Fig. 1 und radial außen die in Fig. 2 hinsichtlich ihres Anschluß- und Wicklungsschemas dargestellte achtpolige Induktionsmotor-Wicklung angeordnet, deren über das Läuferblechpaket 9 axial hinausragender Wickelkopf das Bezugszeichen 5 trägt. Die Wicklungen sind gegenüber der Stirnseite des Läuberblechpaketes 9 und gegenüber der Welle 7 durch eine Isolierendscheibe 12 isoliert. Der in Fig. 3 in einer Draufsicht gezeigte Schaltring S besteht aus Elektrolytkupfer und weist an seinem Umfang verteilt neun Schaltringhaken S1 bis S9 auf. Diese Schaltringhaken können entsprechend den verschiedenen Ausführungsformen nach Fig. 4 bis Fig. 8 entweder radial (Fig. 4 bis Fig. 6) oder axial (Fig. 7, 8) an den Schaltring S angeformt sein. Die Wahl der jeweiligen unterschiedlichen Schaltringhakenausführungen kann durch verschiedene Parameter, wie z. B. die Drahtdicke, die betriebliche mechanische Beanspruchung der Wicklung, die Drahtzugrichtung beim Bewickeln, die notwendige Kontaktfläche zwischen Schaltringhaken und Draht usw. bestimmt sein.

Zur isolierten und mechanisch sicheren Halterung ist der Schaltring S z. B. auf den zuvor auf die Welle 7 aufgeschobenen ersten Kassettenteil 81 der teilbaren Kassette 8 aufgesteckt und im Preßsitz gehalten. Anstelle dieser Preßsitzhalterung zwischen innerem Kassettenteil 81 und Schaltring S könnte in fertigungstechnisch günstiger Weise auch vorgesehen werden, den Schaltring als vorzugsweise offenen Ring in den inneren Kassettenteil 81 eingebettet zu halten. Der innere Kassetenteil 81 besteht vorzugsweise aus einem mit Rücksicht auf den Heißverstemmvorgang temperaturfesten Material. An sich könnte der innere Kassettenteil 81 auch mit der Isolierendsheibe 12 einstückig integriert sein, jedoch würde in einem solchen Fall auch die Isolierendscheibe 12 eine erhöhte Temperaturfestigkeit und damit einen höheren Materialaufwand erfordern.

In Fig. 1, 2 ist in gestrichelter Form jeweils die Stellung des Schaltringhakens S6 nach dem Heißverstemmen gezeigt, bei dem durch Hitze der Isolierüberzug des Wicklungsdrahtes 13 entfernt und der Wicklungsdraht selbst mechanisch im Schaltringhaken eindeutig festgelegt wird. In vorteilhafter Weise ist vorgesehen, daß die Verbindungen der Wicklungsanfänge und Wicklungsenden mit den Schaltringhaken insgesamt und somit insbesondere die Außenoberfläche der Schaltringhaken frei von einem Isolierüberzug bleiben ; dies bedeutet insbesondere, daß bei einer abschließenden Gießharztränkung der Wickelköpfe keine Gießharzmasse zu den Schaltringhaken gelangt. Auf diese Art und Weise kann z. B. ein Wicklungs-Prüfgerät von außen an den Schaltring und somit an die Wicklung angeschlossen werden.

In vorteilhafter Weise ist weiterhin vorgesehen, daß der Schaltring S mit seinen Schaltringhaken S1 bis S9 nach einem solchen Prüflauf dadurch isolierend und geschützt einkapselbar ist, daß abschließend der zweite Kassettenteil 82 in Form einer zum Wickelkopf der Läuferwicklung offenen, den Schaltring in seiner Endposition nach außen schützenden Abdeckglocke ausgebildet ist. Zweckmäßigerweise kann diese Abdeckglocke gleichzeitig als Nabendom für ein gesondert oder einstückig mit dem zweiten Kassettenteil verbundenes Lüfterrad 11 vorgesehend werden. Die Glockenwandung des zweiten Kassettenteils 82 weist außerdem ein axial auf den Wicklungsdraht 13 gerichtetes Andruckteil auf, das den ansonsten freien Wicklungsdraht 13 zwischen dem Wickelkopf 5 und dem Schaltringhaken S6 fixiert ; dazu ist als Gegenstück zum Andruckteil des zweiten Kassettenteils 82 eine entsprechende Anlegeschulter 811 am ersten Kassettenteil 81 angeformt. Bei dem Ausführungsbeispiel gemäß Fig. 1 ist das Andruckteil des zweiten Kassettenteils 82 als fertigungstechnisch besonders einfach herstellbare axial gerichtete Andrucknase 821, nach dem Ausführungsbeispiel gemäß Fig. 2 als zusätzlich schräg nach außen in Richtung des Wicklungsdrahtes 13 hochgezogene, den Wicklungsdraht 13 über einen größeren Bereich abstützender sowie abdeckender und in vorteilhafter Weise mit Lüftungsöffnungen 823 versehener Andruckteller 822 ausgebildet.

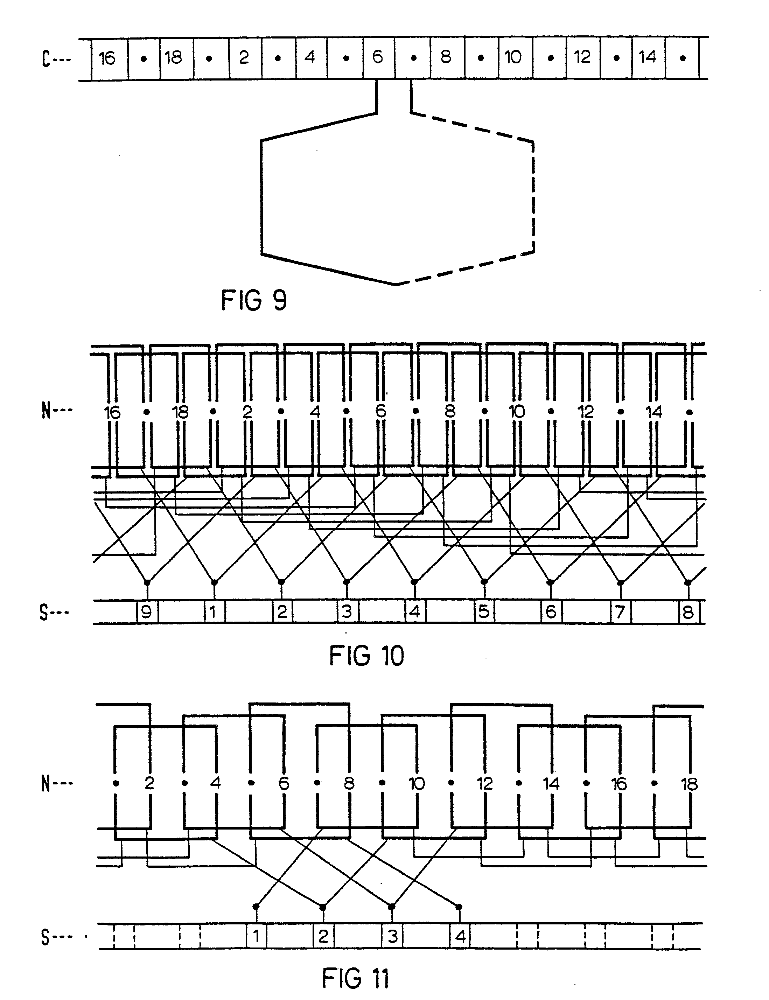

Die Figuren 10 und 11 zeigen zwei vorteilhafte Wicklungen für den eingangs genannten Motor, deren Fertigung mit Hilfe des Schaltringes wesentliche erleichtert, im Fall der Fig. 10 überhaupt erst für einen wirtschaftlichen Einsatz als Massenprodukt ermöglicht wird. Voraussetzung für die vorteilhafte Kombination der in Fig. 10, 11 dargestellten Wicklungsart einerseits und ihrer einfachen Verschaltung durch die Schaltring-Verbindungsvorrichtung andererseits ist die Erkenntnis, daß die bei bekannten Lösungen je für sich gebildeten und erst nach der gesamten Wicklung des Läufers einzeln verschalteten Kurzschlußkreis-Verbindungspunkte eines Wicklungsanfangs und eines Wicklungsendes einer jeden Spulengruppe untereinander verbunden werden können, ohne daß die prinzipielle Funktion des Motors gestört wird. Während bei der Wicklung gemäß Fig. 11 die Nutzahl $N_2$ im Läufer der an sich üblichen Formel $N_2 = 2p \cdot m_2 \cdot q_2$ entspricht, ist bei der Wicklung nach Fig. 10 die gesamte Nutzahl des Läufers unterschliedlich von der aufgrund von Polzahl, Phasenzahl und Nutzahl pro Pol und Strang für eine Ganzlochwicklung nach der Formel $N_2 = 2p \cdot m_2 \cdot q_2$ bestimmbaren Nutzahl.

Durch die freie Wahl der Nutzahlverhältnisse ist eine günstige Voraussetzung für die Auslegung eines Doppelfunktionsmotors mit geringen magnetischen Geräuschen geschaffen. Bisher war dies nur in Verbindung mit einer sogenannten vollintegrierten Wicklung gemäß der DE-B-27 44 472 mit jeweils beiden an einen gemeinsamen Kommutator angeschlossenen Wicklungen des Induktionsmotors und des Universalmotors möglich. Die Kombination zwischen der Wicklung gemäß Fig. 10, die an sich eine bisher nicht übliche Vielzahl von in bestimmter Weise zu verbindenden Wicklungsanfängen und Wicklungsenden beinhaltet, mit der erfindungsgemäßen Verbindungsvorrichtung ermöglicht die gemeinsame Ausnutzung der Vorteile der Motoren gemäß der eingangs genannten DE-B-25 30 294 und der DE-B-24 44 472. Vgl. zu den beschriebenen Wicklungen auch die prioritätsgleiche europäische-Anmeldung 82100812.5 (EP-A-58352)

Der Läufer gemäß Fig. 10 weist also abweichend von der aufgrund der Formel $N_2 = 2p \cdot m_2 \cdot q_2$ sich ergebenden Nutzahl, achtzehn Nuten auf. Die Spulenweite $w_l$ der Spulen entspricht, so genau wie aufgrund dieser Nutzahl möglich, der einfachen Polteilung einer achtpoligen Induktionsmotor-Wicklung. Im vorliegenden Fall würde der genaue Wert der Polteilung $\tau_p = 45°$ geometrisch betragen ; aufgrund der gewählten Nutzahl ergibt sich ein praktischer Wert der Spulenweite von $w_l = 40°$ geometrisch. Der räumliche Winkelabstand zwischen zwei aufeinanderfolgenden Spulen einer Spulengruppe beträgt, wie aus Fig. 10 ohne weiteres ersichtlich, 180° geometrisch.

Fig. 9 zeigt zunächst die in den auch für die Induktionsmotor-Wicklung vorgesehenen Nuten N1 bis N18 des Läuferpaketes angeordnete zweipolige Universalmotor-Wicklung, wobei von dieser Wicklung nur eine einzige, an die Lamellen C6, C7 des Kollektors C angeschlossene, Schleifenwicklung dargestellt ist. Durch Anordnung des Schaltringes S an der Unterseite der in Fig. 10 bzw. 11 dargestellten Induktionsmotor-Wicklung einerseits und des Kollektors C an der Oberseite der in Fig. 9 dargestellten Universalmotor-Wicklung soll angedeutet werden, daß insbesondere in für die maschinelle Fertigung der beiden Wicklungen vorteilhafter Weise Kollektor C und Schaltring S an gegenüberliegenden Stirnseiten des Läuferblechpaketes 9 anzuordnen sind.

Die in Fig. 10 dargestellte achtpolige Induktionsmotor-Wicklung kann unter Zuhilfenahme des für diese Wicklung vorteilhaften elektrisch leitenden und mit neuen Haken S1 bis S9 versehenen Schaltringes S wie folgt maschinell, z. B. mit Hilfe eines Flyers, auf einfache und betriebssichere Weise erfolgen : Der Anfang des ununterbrochenen Wicklungsdrahtes wird z. B. am Schaltringhaken S3 kontaktiert und zur Nut N3 gezogen, die Spule N3, N1 wird gewickelt, der Wicklungsdraht wird ohne Kontaktierung des Schaltrings S im Sinne einer Reihenschaltung zur nächsten Spule der die Spule N1, N3 enthaltenden Spulengruppen, nämlich zur Nut N12 gezogen, die Spule N12, N10 wird gewickelt, der Spulendraht wird zum nächstfolgenden Schaltringhaken S4 gezogen, um diesen eingelegt und zur Nut N5 gezogen, dann wird mit dem Wickeln der ersten Spule N5, N3 der nächstfolgenden Spulengruppen N5, N3 ; N14, N12 begonnen. Dieses Wicklungsverfahren wird fortgeführt, bis das Ende des Wicklungsdrahtes am Schaltringhaken S3 wieder angelangt und die gesamte Wicklung mit neun Spulenpaaren ohne Unterbrechung des Wicklungsdrahtes verschaltet ist. Durch Heißverstemmen kann dann die elektrische Kontaktierung und endgültige mechanische Festlegung zwischen den Schaltringhaken und dem einliegenden Wicklungsdraht erfolgen.

Fig. 11 zeigt eine Wicklung mit $N_2 = 2p \cdot m_2 \cdot q_2$ Nuten im Läufer. Jede Spulengruppe besteht aus drei Spulenpaaren mit je drei in Reihe geschalteten Spulen. Ein erstes Spulenpaar umfaßt z. B. die Spulen N1, N4 ; N7, N10 ; N13, N16. Die Reihenschaltungen sind über die Verbindungen der Schaltringhaken S1 bis S4 jeweils zu Kurzschlußkreisen zusammengehaltet, wobei auch im Fall gemäß Fig. 11 die gesamte Wicklung mit einem ununterbrochenen Wicklungsdraht fortschreitend wickelbar ist. Für den Schaltring S ist in Fig. 10 und Fig. 11 die gleiche Schaltring-Bauart als Einheitsbauteil verwendet.

**Patentansprüche**

1. Verbindungsvorrichtung für Wicklungsanfänge und Wicklungsenden von Spulengruppen der Induktionsmotor-Läuferwicklung eines elektrischen Motors in dessen Ständerblechpaket in gemeinsamen Nuten die Ständerwicklung eines zweipoligen Universalmotors und die eines höherpoligen Induktionsmotors angeordnet sind und in dessen Läuferblechpaket in gemeinsamen Nuten einerseits eine mit einem Kommutator verbundene Universalmotor-Wicklung mit einer jener des erregenden Universalmotor-Ständerfeldes entsprechenden Polzahl und andererseits eine davon galvanisch völlig getrennte, aus zumindest zwei Spulengruppen mit in Reihe geschalteten und jeweils über die Verbindungsvorrichtung zu Kurzschlußkreisen verschalteten Spulen gleicher Spulenweite und Spulenwindungszahl bestehende Induktionsmotor-Wicklung mit im Induktionsmotor-Betrieb einer des erregenden Induktionsmotor-Ständerfeldes entsprechenden Polzahl und mit im Universalmotor-Betrieb sich zu Null addierenden induzierten Spannungen angeordnet sind, dadurch gekennzeichnet, daß vor dem Wickelkopf (5) der Induktionsmotor-Wicklung, der dem allein mit der Universalmotor-Wicklung (10) verbundenen Kollektor (C) abgewandt ist, konzentrisch zur Welle (7) des Läufers ein aus elektrisch leitfähigem Material bestehender Ring (Schaltring S) angeordnet ist, der auf seinem Umfang verteilt eine mindestens der Anzahl der herzustellenden Verbindungen entsprechende Anzahl von ebenfalls elektrisch leitfähigen hakenförmigen Ansätzen (Schaltringhaken S1-S9) trägt, und daß die Wicklungsanfänge und Wicklungsenden der von demselben Wickler nacheinander gewickelten Spulengruppen ununterbrochen unter Zwischenkontaktierung eines Schaltringhakens jeweils durchgewickelt sind.

2. Vorrichtung nach Anspruch 1, dadurch gekennzeichnet, daß die Anzahl der Schaltringhaken (S1, S2, S3...) zumindest gleich der Anzahl der Spulenpaare der Induktionsmotor-Wicklung ist.

3. Vorrichtung nach einem der Ansprüche 1 oder 2, dadurch gekennzeichnet, daß die jeweils von einem Wicklungsende und einem anschließenden Wicklungsanfang kontaktierter Schaltringhaken (S1, S2, S3...) in ihrer tangentialen Lage zum Läuferblechpaket (9) etwa in der Mitte zwischen der Nutöffnung des Wicklungsendes und der Nutöffnung des Wicklungsanfangs angeordnet sind.

4. Vorrichtung nach einem der Ansprüche 1 bis 3, dadurch gekennzeichnet, daß der Schaltring (S) und die Schaltringhaken (S1, S2, S3...) ein einziges Teil aus Elektrolytkupfer bilden.

5. Vorrichtung nach einem der Ansprüche 1 bis 4, dadurch gekennzeichnet, daß die zu den Schaltringhaken (S1, S2, S3...) geführten Wicklungsanfänge und Wicklungsenden durch Heißverstemmen an den Schaltringhaken mechanisch fixiert und mit diesen elektrisch verbunden sind.

6. Vorrichtung nach einem der Ansprüche 1 bis 5, dadurch gekennzeichnet, daß die Verbindungsstellen der Wicklungsanfänge und Wicklungsenden mit den Schaltringhaken insoweit frei von einem Isolierüberzug sind, daß von außen ein elektrisches Wicklungs-Prüfgerätes anschließbar ist.

7. Vorrichtung nach einem der Ansprüche 1 bis 6, dadurch gekennzeichnet, daß der Schaltring (S) in einer zumindest zweiteiligen, isolierenden Kassette (8) einkapselbar ist, deren erster, zunächst axial über die Welle (7) schiebbarer Kassettenteil (81) als Träger für den ihn konzentrisch umgebenden Schaltring (S) und deren zweiter, abschließend über die Welle (7) des Läufers schiebbarer Kassettenteil (82) in Form einer zur Stirnseite des Läuferblechpaketes (9) offenen, den Schaltring (S) nach außen schützenden Abdeckglocke ausgebildet ist.

8. Vorrichtung nach Anspruch 7 bis 9, dadurch gekennzeichnet, daß der erste, innere Kassettenteil (81) mit einer Anlegeschulter (811) und der zweite, äußere Kassettenteil (82) mit einem Andruckteil unter Bildung eines Ringspalts zwischen der Anlegeschulter und dem Andruckteil versehen ist, in dem der Wickeldraht (13) zwischen dem Wickelkopf (5) und dem zugeordneten Schaltringhaken (S6), insbesondere fliehkraftfest, fixierbar ist.

9. Vorrichtung nach Anspruch 10, dadurch gekennzeichnet, daß der Andruckteil als mit ihrer Spitze gegen den Wickeldraht (13) anliegende Andrucknase (821) ausgebildet ist.

10. Vorrichtung nach Anspruch 9, dadurch gekennzeichnet, daß der Andruckteil als mit seiner Bodenfläche gegen den Wickeldraht (13) anliegender Andruckteller (822) ausgebildet ist.

11. Vorrichtung nach Anspruch 10, dadurch gekennzeichnet, daß der Andruckteller (822) mit Lüftungsöffnungen (823) versehen ist.

12. Vorrichtung nach einem der Ansprüche 7 bis 11, dadurch gekennzeichnet, daß mit dem zweiten, äußeren Kassettenteil (82) ein Lüfterrad (11) verbunden ist.

**Claims**

1. A connecting device for the beginnings and ends of windings of groups of the coils in the induction motor rotor winding of an electric motor, in which there is arranged in common grooves of a stack of stator laminations the stator winding of a two-pole universal motor, and that of an induction motor having a higher number of poles, and in whose bundle of rotor laminations there is arranged in common grooves on the one hand a universal motor winding connected to a commutator with a number of poles corresponding to that of the exciting universal motor stator field, and there is arranged on the other hand an induction motor winding electrically isolated therefrom consisting of a least two groups of coils, where the coils possess an identical width and number of coil turns and are connected in series and to short-circuiting circuits via the connecting device, which induction motor winding has a number of poles which corresponds to that of the exciting induction motor stator field during the operation of the induction motor, and has induced voltages which add up to zero during the operation of the universal motor, characterized in that preceding the winding head (5) of the induction motor winding, which head faces away from the collector (C) connected solely to the universal motor winding (10), there is arranged concentrically with the shaft (7) of the rotor a switching ring (S) which consists of electrically conductive material and which bears a number of electrically conductive hook-like attachements (switching ring hooks S1-S9) distributed over its periphery, which number corresponds at least of the number of connections which are to be established, and that the beginnings and ends of the windings of the groups of coils wound consecutively by the same winder are each fully-wound in uninterrupted fashion, intermediately contacted by a switching ring hook.

2. A connecting device as claimed in Claim 1, characterised in that the number of the switching ring hooks (S1, S2, S3...) is at least equal to the number of pairs of coils of the induction motor winding.

3. A device as claimed in one of Claims 1 or 2, characterised in that in their tangential position relative to the stack of rotor laminations (9) the switching ring hooks (S1, S2, S3...), which are each contacted by an end of one winding and a beginning of a following winding, are arranged approximatively in the centre between the groove opening of the end of the winding and the groove opening of the beginning of the winding.

4. A device as claimed in one of Claims 1 to 3, characterised in that the switching ring (S) and switching ring hooks (S1, S2, S3...) form one single component composed of electrolytic copper.

5. A device as claimed in one of Claims 1 to 4, characterised in that the beginnings and ends of the windings which lead to the switching ring hooks (S1, S2, S3...) are mechanically fixed to the switching ring hooks by hot caulking and are electrically connected thereto.

6. A device as claimed in one of Claims 1 to 5, characterised in that the connection of the beginnings and ends of the windings to the switching ring hooks are free of insulating coating to permit connection of an electric-winding testing device from the exterior.

7. A device as claimed in one of Claims 1 to 6, characterised in that the switching ring (S) is encapsulated in an at least 2-part insulating cartridge (8) whose first component (81) is firstly slipped axially over the shaft (7), and is designed as a carrier for the switching ring (S) by which it is concentrically surrounded, and whose second component (82), subsequently slipped over the shaft (7) of the rotor, is in the form of a covering globe open towards the end side of the stack of rotor laminations (9) and which protects the switching ring (S) from the exterior.

8. A device as claimed in Claims 7 to 9, characterised in that the first, inner cartridge component (81) is provided with a contact shoulder (811) and the second, outer cartridge component (82) is provided with a pressure component, forming an annular gap between the contact shoulder and the pressure component in which the winding wire (13) can be fixed, in particular between the winding head (5) and the assigned switching ring hook (S6) and resistant to centrifugal force.

9. A device as claimed in Claim 10, characterised in that the pressure component is designed as a pressure nose (821) whose tip abuts against the winding wire (13).

10. A device as claimed in Claim 9, characterised in that the pressure component is designed as a pressure dish (822) whose base surface abuts against the winding wire (13).

11. A device as claimed in Claim 10, characterised in that the pressure dish (822) is provided with ventilating openings (823).

12. A device as claimed in one of Claims 7 to 11, characterised in that the second, outer cartridge component (82) is connected to a fan wheel (11).

**Revendications**

1. Dispositif de connexion pour les origines et les fins de groupes d'enroulement de l'enroulement rotorique d'un motor à induction, d'un moteur électrique dans le paquet de tôles statorique duquel sont disposés dans des encoches communes l'enroulement statorique d'un moteur universel bipolaire et celui d'un moteur à induction à nombre de pôles plus élevé et dans le paquet de tôles rotorique duquel sont disposés dans des encoches communes, d'une part, un enroulement d'un moteur universel, relié à un commutateur et ayant un nombre de pôles qui correspond à celui des champs statoriques du moteur universel à produire, et, d'autre part, un enroulement de moteur à induction qui en est totalement séparé galvaniquement et qui est constitué par au moins deux groupes de bobines à deux bobines montées en série et respectivement reliées par l'intermédiaire de dispositifs de connexion en circuits à court-circuit, ayant le même pas et le même nombre de spires par bobines, le nombre de pôles correspondant, en fonctionnement en moteur à induction, au champ statorique du moteur à induction à exciter et les tensions induites s'ajoutant à la valeur nulle, dans le cas du fonctionnement en moteur universel, caractérisé par le fait qu'en avant de la tête de bobine (5) de l'enroulement du moteur à induction, qui est éloignée du collecteur (C) qui est seulement relié à l'enroulement (10) du moteur universel, est disposée, concentriquement à l'arbre (7) du rotor, une bague (bague de connexion S) constituée avec un matériau électriquement conducteur et comportant, avec répartition sur sa périphérie, un nombre d'appendices en forme de crochets (crochets S1-S9 de la bague de connexion), faits avec un matériau électriquement conducteur et correspondant au moins au nombre de liaisons à établir, et que les origines des enroulements et les fins des enroulements des groupes de bobines qui sont enroulées successivement par le même enrouleur, sont respectivement enroulées sans interruption, et avec réalisation intermédiaire d'un contact électrique avec un crochet de la bague de connexion.

2. Dispositif de connexion selon la liaison (1), caractérisé par le fait que le nombre de crochets (S1, S2, S3...) de la baguè de connexion est au moins égal au nombre de paires de bobines de l'enroulement du moteur à induction.

3. Dispositif selon l'une des revendications 1 ou 2, caractérisé par le fait que les crochets de connexion (S1, S2, S3...) qui sont respectivement contactés par une fin d'enroulement et par une origine d'enroulement suivant, sont disposés, dans leur position tangentielle par rapport au paquet de tôles rotorique (9), à peu près au milieu entre l'ouverture de la gorge de la fin d'un enroulement et l'ouverture de la gorge de l'origine d'enroulement.

4. Dispositif selon l'une des revendications 1 à 3, caractérisé par le fait que la bague de connexion (S) et les crochets (S1, S2, S3...) de la bague de connexion constituent une pièce d'un seul tenant faite avec du cuivre électrolytique.

5. Dispositif selon l'une des revendications 1 à 4, caractérisé par le fait que les origines et les fins des enroulements, qui sont amenées au niveau des crochets (S1, S2, S3...) de la bague de connexion sont fixées mécaniquement aux crochets de la bague de connexion et sont reliées électriquement à ceux-ci, par matage à chaud.

6. Dispositif selon l'une des revendications 1 à 5, caractérisé par le fait que les points de liaison des origines des enroulements et des fins des enroulements sont en ce sens dépourvus d'un revêtement isolant, qu'un appareil de contrôle électrique des enroulements peut être raccordé de l'extérieur.

7. Dispositif selon l'une des revendications 1 à 6, caractérisé par le fait que la bague de connexion (S) est susceptible d'être encapsulée dans une cassette isolante (8), faite au moins en deux parties, et dont la première partie de la cassette (81), qui est susceptible d'être d'abord engagée axialement sur l'arbre (7) ; est réalisée sous la forme d'un support pour la bague de connexion (Ṡ) qui l'entoure concentriquement, et dont la seconde partie de cassette (82) qui est finalement susceptible d'être engagée sur l'arbre (7) du rotor, est réalisée sous la forme d'une cloche de couverture qui est ouverte du côté frontal du paquet de tôles rotoriques (9) et protégeant la bague de connexion (S), par rapport à l'extérieur.

8. Dispositif selon la revendication 7, caractérisé par le fait que la première partie, intérieure, de la cassette (81) est pourvue d'un épaulement d'appui (811), et la seconde partie (82), extérieure de la cassette, est pourvue d'une pièce de pression, avec formation d'une fente annulaire entre l'épaulement d'appui et la pièce de pression, fente annulaire dans laquelle est susceptible d'être fixé, notamment pour résister à la force centrifuge, le fil d'enroulement (13) situé entre la tête de bobine (5) et le crochet associé (S6) de la bague de connexion.

9. Dispositif selon la revendication 10, caractérisé par le fait que la pièce de pression est réalisée sous la forme d'un bec de pression (821) portant, par sa pointe, contre le fil d'enroulement (13).

10. Dispositif selon la revendication 9, caractérisé par le fait que la pièce de pression est réalisée sous la forme d'un plateau de pression (822) qui porte, par sa surface de fond, contre le fil d'enroulement (13).

11. Dispositif selon la revendication 10, caractérisé par le fait que le plateau de pression (822) est pourvu d'ouvertures d'aération (823).

12. Dispositif selon l'une des revendications 7 à 11, caractérisé par le fait qu'à la seconde partie extérieure (82) de la cassette, est reliée une roue de ventilateur (11).

0 058 351

FIG 1

FIG 2

FIG 3

FIG 4

FIG 5

FIG 6

FIG 7

FIG 8

C--- | 16 | • | 18 | • | 2 | • | 4 | • | 6 | • | 8 | • | 10 | • | 12 | • | 14 | • |

FIG 9

N--- | 16 | • | 18 | • | 2 | • | 4 | • | 6 | • | 8 | • | 10 | • | 12 | • | 14 | • |

S--- | 9 | 1 | 2 | 3 | 4 | 5 | 6 | 7 | 8 |

FIG 10

N--- | • | 2 | • | 4 | • | 6 | • | 8 | • | 10 | • | 12 | • | 14 | • | 16 | • | 18 |

S--- | 1 | 2 | 3 | 4 |

FIG 11